# FASCICULE DE BREVET EUROPEEN

(11) **EP 1 638 789 B1**
(45) Date de publication et mention de la délivrance du brevet: **30.09.2009**
(21) Numéro de dépôt: 04740200.3
(22) Date de dépôt: 23.06.2004
(51) Int. Cl.: B60C 23/04

(54) **DISPOSITIF DE CONNEXION ELECTRIQUE ENTRE UNE ROUE ET UN ENSEMBLE ROULEMENT-MOYEU**
ELEKTRISCHE VERBINDUNGSVORRICHTUNG ZWISCHEN EINEM RAD UND EINER KUGELLAGER-NABEANORDNUNG
DEVICE FOR ELECTRICAL CONNECTION BETWEEN A WHEEL AND A HUB BEARING UNIT

(30) Priorité: 24.06.2003 FR 0307630
(43) Date de publication de la demande: 29.03.2006
(73) Titulaire: Société de Technologie Michelin, 63000 Clermont-Ferrand (FR); Michelin Recherche et Technique S.A., 1763 Granges-Paccot (CH); SKF INDUSTRIE S.p.A., 10121 Torino (IT)
(72) Inventeur: CRIAUD, Christophe, F-63200 Riom (FR); DRAP, Sébastien, F-63910 Vassel (FR); FAHAS, Salima, F-63200 Mozac (FR); GIAI, Bruno, I-10060 Abbadia Alpina (IT); MOLENAAR, Alexander, NL-3471 GA Kamerik (NL); MONTAGNONI, Raffaele, I-10064 Pinerolo (IT); PILONE, Simona, I-16132 Genova (IT)
(74) Mandataire: Dequire, Philippe Jean-Marie Denis
(86) Numéro de dépôt international: PCT/EP2004/006778
(87) Numéro de publication internationale: WO 2004/113102

(56) Documents cités:
- DE-U- 9 211 497
- US-A- 3 757 294
- US-A- 3 944 971
- US-A- 4 837 553

## Description

La présente invention concerne un dispositif de connexion électrique entre une roue et un ensemble roulement-moyeu.

Par le brevet des Etats-Unis No. 4,837,553, on connaît un dispositif de connexion électrique entre une roue et un ensemble roulement-moyeu qui est apte à transmettre un signal électrique d'un capteur de pression disposé à l'intérieur de la roue d'un véhicule vers le même véhicule, et qui comprend un circuit électrique défini par deux parcours électriques, un premier de ces parcours électriques s'étendant depuis un premier pôle du capteur, le long d'une chaîne de pièces métalliques en contact électrique entre elles et définie entre autres par un anneau extérieur de l'ensemble roulement-moyeu et par une suspension du véhicule au moyen d'un deuxième parcours électrique qui s'étend à partir d'un deuxième pôle du capteur jusqu'à une transmission du véhicule, en traversant un trou axial ménagé dans un anneau interne de l'ensemble roulement-moyeu.

Le premier parcours électrique est en outre défini par une lampe témoin située à l'intérieur du véhicule et reliée à un pôle positif d'une batterie et le deuxième parcours électrique est utilisé pour mettre à la terre le deuxième pôle du capteur et donc pour fermer le circuit électrique.

Dans le brevet des Etats-Unis décrit ci-dessus, le capteur de pression est un capteur purement passif dans lequel la diminution de la pression de la roue détermine le raccordement électrique du premier pôle et du deuxième pôle et par conséquent l'activation de la lampe témoin.

Le dispositif de connexion électrique décrit ci-dessus présente certains inconvénients qui sont dus d'une part à la très grande exiguïté de la structure et d'autre part à la constitution du premier parcours électrique. En effet, l'exiguïté structurelle de ce dispositif de connexion électrique rend le dispositif inadapté à être installé dans des véhicules de la dernière génération dans lesquels il faut, en utilisation, transférer à la roue un nombre assez élevé d'informations, ainsi que des capteurs plus sophistiqués. En outre, la constitution du circuit électrique et de plus du deuxième parcours électrique non seulement empêche d'utiliser d'autres capteurs mais ne permet pas davantage d'utiliser des capteurs actifs qui ont besoin d'être alimentés électriquement pour leur fonctionnement.

L'objet de la présente invention est de réaliser un dispositif de connexion électrique entre une roue et un ensemble roulement-moyeu qui ne présente pas les inconvénients décrits ci-dessus.

Selon la présente invention, on réalise un dispositif de connexion électrique entre une roue et un ensemble roulement-moyeu, la roue étant montée sur une collerette externe de l'ensemble roulement-moyeu et l'ensemble roulement-moyeu comprenant un anneau extérieur fixe en rotation et solidaire de la suspension du véhicule et un anneau interne doté d'une collerette de centrage, d'une cavité frontale ouverte définie par ladite collerette de centrage et d'une cavité axiale débouchant dans ladite cavité frontale ; le dispositif de connexion étant **caractérisé en ce qu**'il comprend un premier câble de connexion solidaire de l'anneau interne et qui s'étend à l'intérieur de la cavité axiale et de la cavité frontale, un deuxième câble de connexion intégré à ladite roue ainsi que des moyens de connexion associés à ladite collerette de centrage pour assurer un contact galvanique sélectivement débranchable entre le premier câble et le deuxième câble.

Un tel dispositif de connexion permet d'alimenter en énergie électrique les capteurs disposés dans la roue, ces capteurs peuvent donc être actifs, et de transmettre au véhicule un grand nombre d'informations.

L'invention va être décrite en référence aux dessins annexés qui en illustrent un exemple de réalisation non limitatif et dans lesquels :
- la figure 1 présente une vue en coupe schématique d'un ensemble moyeu-roulement roue complet avec les principaux éléments d'un premier dispositif de connexion électrique selon l'invention ;
- la figure 2 présente une première pièce de connexion, vue en perspective ;
- la figure 3 présente la première pièce de la figure 2, vue en coupe ;
- la figure 4 présente une seconde pièce de connexion, vue en perspective ;
- la figure 5 présente en perspective les deux premières pièces assemblées avec une troisième pièce de connexion ;
- la figure 6 présente une vue en coupe de la vue 5 précédente ;
- la figure 7 présente une vue schématique en perspective d'un second dispositif de connexion électrique selon l'invention ;
- la figure 8 présente une vue en coupe du dispositif de connexion de la figure 7 ;
- la figure 9 présente une vue en coupe d'un troisième dispositif de connexion selon l'invention ;
- la figure 10 présente une vue en perspective partielle du dispositif selon la figure 9 ;
- la figure 11 est une vue en perspective et schématique d'un quatrième mode de réalisation du dispositif de connexion électrique selon la présente invention ;
- la figure 12 représente en partie en coupe et en partie découpée dans un souci de clarté, un premier mode de réalisation préféré d'un détail particulier du dispositif de la figure 11 et
- la figure 13 représente en partie en coupe et en partie découpée dans un souci de clarté un deuxième mode de réalisation préféré du dispositif de la figure 8.

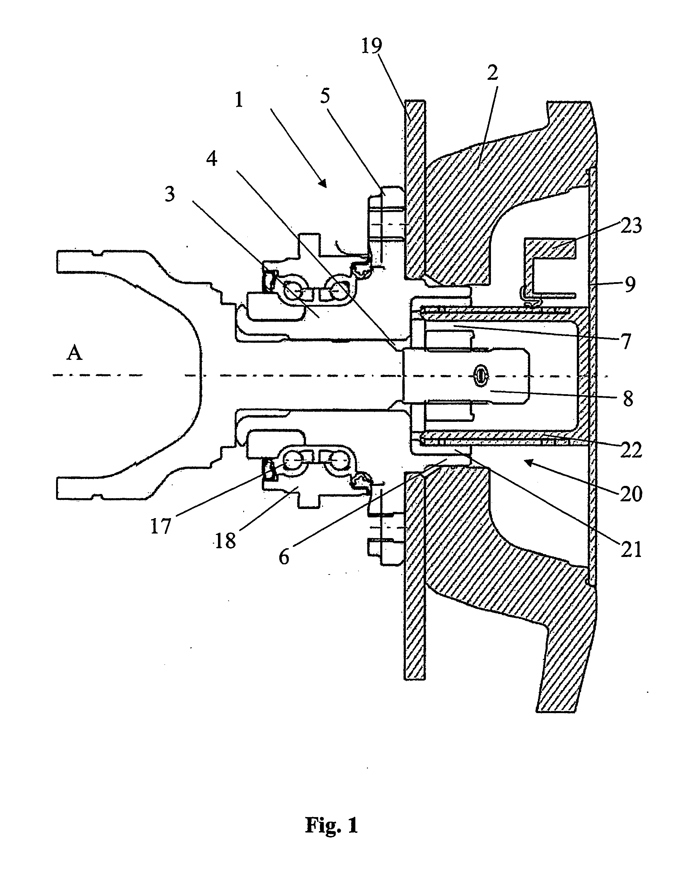

La figure 1 présente une vue schématique en coupe d'un ensemble roulement-moyeu 1 et roue 2 avec les principaux éléments d'un dispositif 20 de connexion électrique selon l'invention.

Cet ensemble roulement-moyeu 1 comprend un anneau intérieur 3 adapté pour être mobile en rotation autour d'un axe A, une collerette de fixation 5 destinée à fixer une roue 2 et une collerette de centrage 6 destinée à centrer la roue 2 lors de son montage. L'anneau intérieur 3 présente une cavité intérieure 4 axiale. Cette cavité est adaptée pour s'emboîter autour d'une fusée 8 lors du montage de l'ensemble moyeu-roulement sur l'essieu du véhicule, dans le cas d'un essieu moteur. La collerette de centrage 6 définit une cavité 7 ouverte sur l'extérieur de l'ensemble 1, du côté de la roue 2.

Dans l'exemple de réalisation de l'ensemble moyeu-roulement 1 de la figure 1, l'anneau intérieur 3, la collerette de fixation 5 et la collerette de centrage 6 forment une pièce de fonderie unique.

Un premier dispositif de connexion électrique 20 selon l'invention comprend une première pièce de connexion électrique 21 emboîtée axialement contre la paroi radialement intérieure de la collerette de centrage 6, une seconde pièce de connexion électrique 22, de révolution avec une section axiale en forme de U, les deux branches du U étant emboîtées axialement contre la paroi radialement intérieure de la première pièce de connexion électrique 21 et s'étendant axialement au-delà de la collerette de centrage 6, tout en restant à l'intérieur du volume défini par la surface extérieure de la roue 2. Le dispositif 20 comprend aussi une troisième pièce de connexion électrique 23.

Sur la figure 1, on voit aussi schématiquement un enjoliveur 9 dont la partie centrale s'appuie contre le fond de la seconde pièce de connexion 22, ainsi qu'un disque de freinage 19, l'anneau extérieur fixe 18 et les billes 17 du roulement.

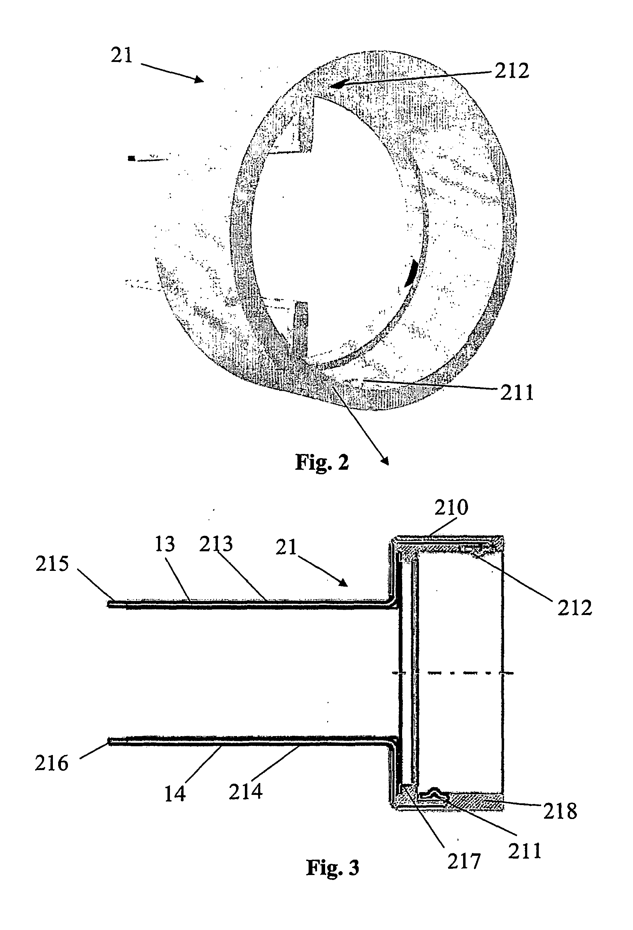

Un mode de réalisation de la première pièce de connexion 21 est maintenant décrit avec les figures 2 et 3. Cette pièce 21 est essentiellement une pièce de révolution tubulaire 210 de dimensions adaptées pour s'emboîter axialement dans la cavité 7 de la collerette de centrage 6. La longueur axiale de la pièce 21 est sensiblement égale à celle de la collerette de centrage 6. La pièce 21 comprend aussi deux prolongements 213 et 214 comportant intérieurement deux fils 13 et 14. Ces prolongements sont préférentiellement en plastique rigide pour faciliter le montage de la pièce et le passage de ces deux prolongements à travers des rainures ménagées dans la paroi radialement intérieure de la cavité intérieure 4 de l'anneau intérieur 3. Les extrémités 215 et 216 peuvent alors être connectées galvaniquement avec les moyens (non représentés) de transmission électriques de l'ensemble moyeu-roulement destinés à assurer la liaison avec le véhicule. Deux contacts électriques ponctuels 211 et 212 sont disposés sur la paroi radialement intérieure de la partie tubulaire 210 de la pièce 21. Ces contacts sont décalés axialement et bien entendu reliés galvaniquement avec les fils 13 et 14. La pièce 21 est essentiellement constituée d'un isolant 218 et comprend aussi un renfort circulaire 217. Ce renfort peut être réalisé en un matériau plastique rigide ou métallique.

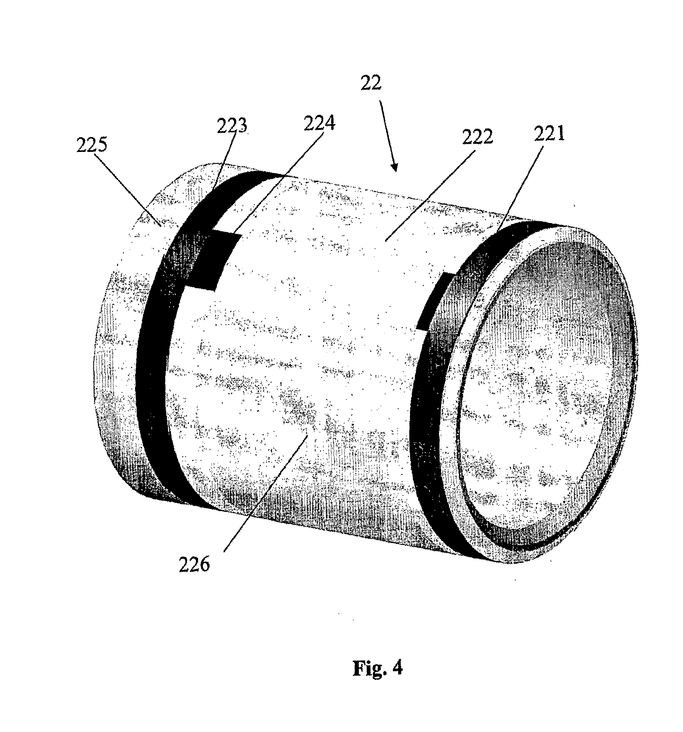

La figure 4 présente, en perspective une vue schématique de la seconde pièce de connexion électrique 22 du dispositif 20. Cette pièce est une pièce de révolution de section axiale en forme de U : une partie tubulaire 226 et un fond plan 225. Elle est essentiellement constituée de matériau isolant avec, disposés sur la paroi radialement extérieure de sa partie tubulaire, trois contacts électriques en forme de pistes électriques annulaires : 221, 222, 223. La pièce 22 est destinée à être emboîtée axialement intérieurement relativement à la première pièce de connexion 21. Les pistes 221 et 222 sont disposées axialement de façon à venir en contact après emboîtage dans la pièce 21 avec les contacts 211 et 212 de cette pièce 21. La forme circulaire des contacts de la pièce 22 a l'avantage de ne pas imposer un azimut précis pour l'assemblage. Celui-ci est ainsi facilité. Bien entendu, il serait possible d'inverser le dispositif et de disposer les contacts circulaires sur la pièce 21, mais, étant donné que la pièce 22 a une longueur axiale supérieure, il est plus facile de mettre ces pistes circulaires sur la seconde pièce 22. Le contact 223 est lui aussi circulaire et est disposé axialement à proximité du fond de la pièce 22, au-delà du contact 222. Le contact 222 est ainsi placé axialement entre les deux contacts 221 et 223 et présente de préférence une largeur axiale bien supérieure de telle sorte que ce contact 222 s'étend axialement, après emboîtage dans la pièce 21 et l'ensemble moyeu-roulement au-delà de cette pièce 21. Les deux contacts 221 et 223 sont reliés par un conducteur 224, isolé relativement au contact 222.

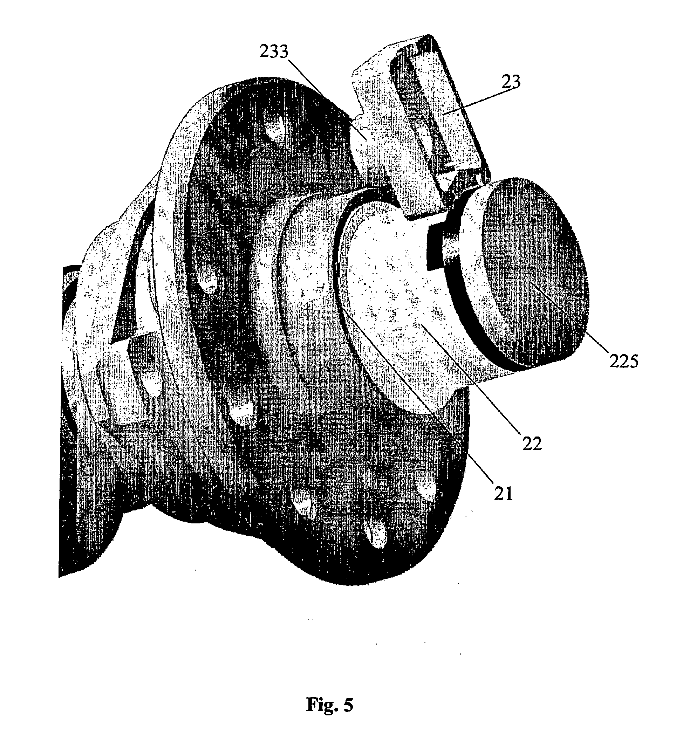

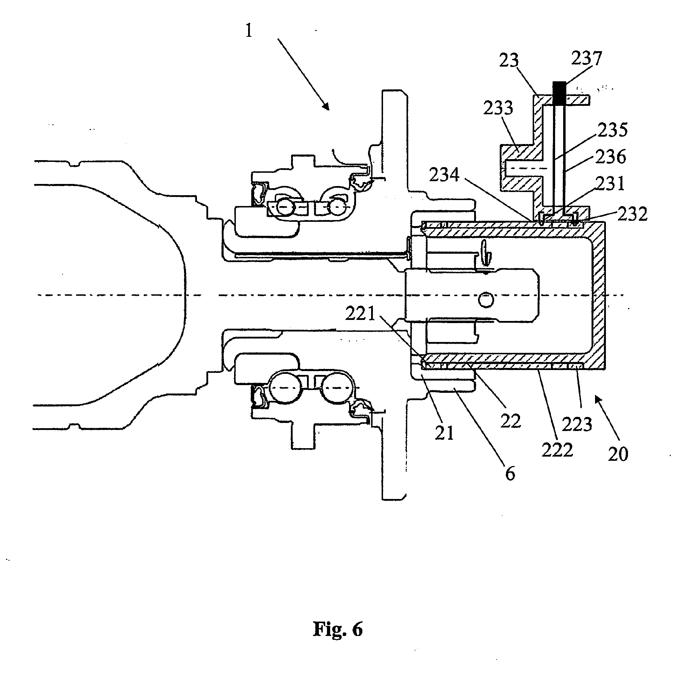

Les figures 5 et 6 présentent en perspective et en coupe les deux pièces 21 et 22 ainsi qu'une troisième pièce 23 du dispositif 20. La pièce 23 est en contact radialement extérieurement relativement à la pièce 22, axialement extérieurement relativement à la pièce 21 et la collerette de centrage 6. Le téton 233 permet la fixation de cette pièce 23 sur un goujon de la roue 2, par exemple celui présent usuellement pour servir d'antivol de la roue.

La pièce 23 est en forme de parallélépipède avec une paroi 234 adaptée à la courbure de la partie tubulaire de la pièce 22 pour venir en contact avec elle. Elle comprend deux contacts ponctuels 231 et 232, axialement décalés pour venir en contact respectivement avec les contacts circulaires 222 et 223 de la pièce 22. Ces contacts 231 et 232 sont galvaniquement reliés chacun à un fil 235 et 236, ces deux fils sont ensuite intégrés dans un câble de liaison 237 du dispositif aux moyens de transmission électrique de la roue.

Ces trois pièces 21, 22, et 23 du dispositif 20 ont l'avantage de ne modifier ou perturber en rien le montage d'un moyeu-roulement sur l'essieu ainsi que d'une roue sur l'essieu. Ces trois pièces se montent successivement sans moyens complémentaires et peuvent aussi facilement être démontées.

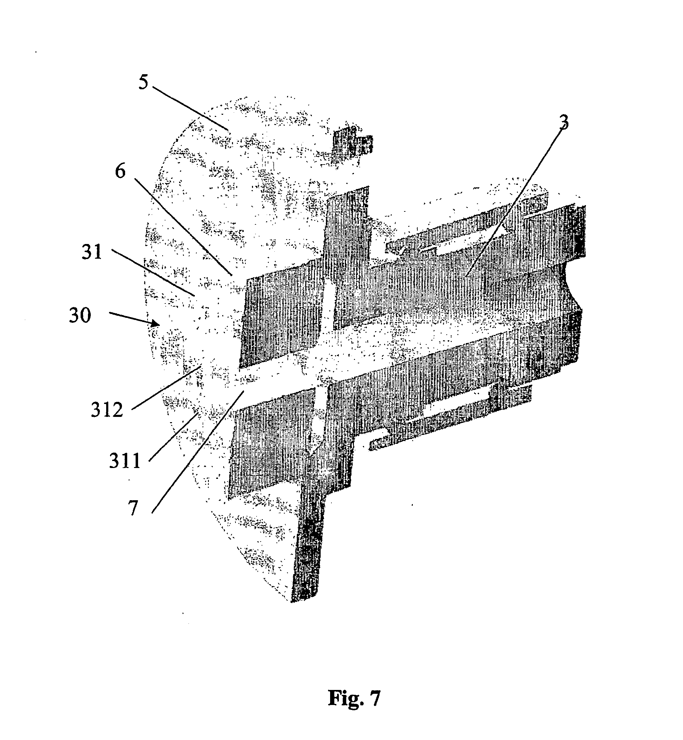

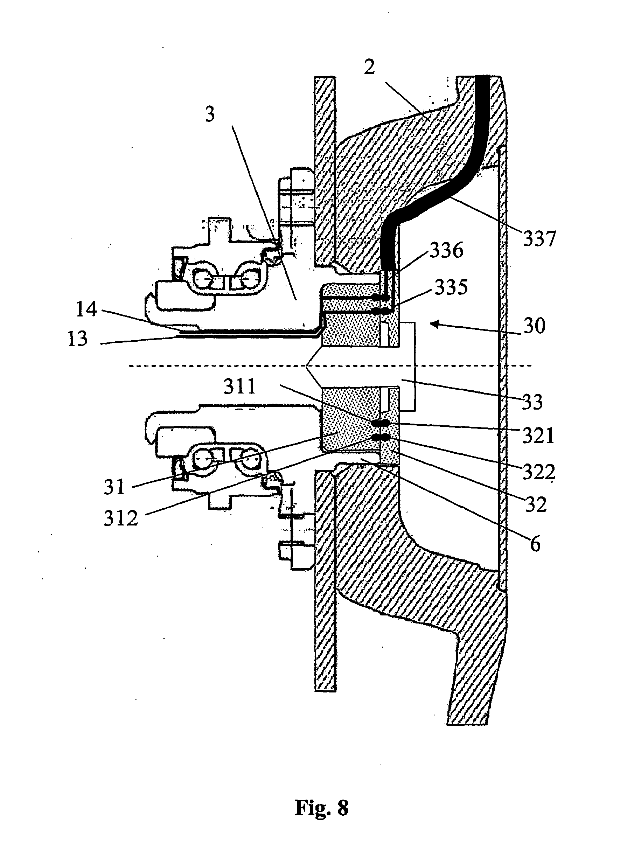

Les figures 7 et 8 présentent un second mode de réalisation 30 d'un dispositif selon l'invention. La figure 7 est une vue schématique en perspective et la figure 8 est une vue en coupe. Sur ces vues schématiques, on voit une pièce 31 de fonction similaire à la pièce 21, emboîtée dans la cavité 7 d'une collerette de centrage 6.

Cette pièce 31 se distingue en ce qu'elle a une forme essentiellement cylindrique et comprend deux contacts 311 et 312 disposés sur sa partie axialement extérieure. La direction des contacts est ainsi axiale et non plus radiale. Les contacts sont ici en forme de piste circulaire mais pourraient aussi être ponctuels. On peut alors disposer une pièce 32 en forme de disque comportant deux contacts 321 et 322 placés sur la paroi intérieure du fond du disque en regard des contacts de la pièce 31. Les contacts des deux pièces sont ici tous en forme de pistes circulaires, mais l'une des pièces pourrait avoir des contacts ponctuels sans remettre en question la possibilité d'assembler sans azimuter les deux pièces. L'assemblage des deux pièces assure la continuité électrique entre les contacts. Cet assemblage est assuré par la vis 33. Les fils 335 et 336 relient les contacts 321 et 322 de la pièce 32 au câble 337 relié aux moyens de transmission électrique de la roue. De l'autre côté, les fils 13 et 14 sont reliés aux pistes 311 et 312 de la pièce 31.

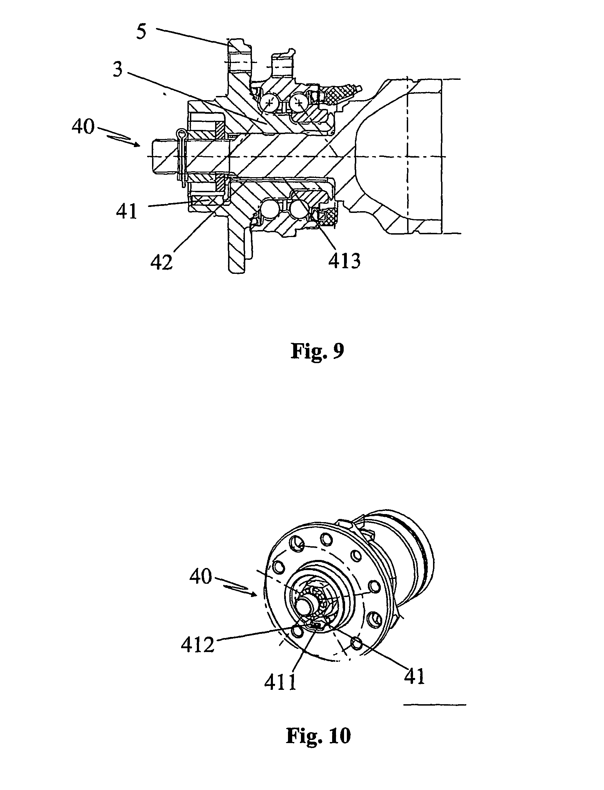

Les figures 9 et 10 présentent schématiquement en coupe et en perspective un troisième type de dispositif 40 de connexion électrique selon l'invention. Dans ce troisième type de dispositif, on voit une pièce 41 fixée, par exemple par collage, à la paroi intérieure de la collerette de centrage 6 et un câble 413 s'étendant le long d'une rainure 42 ménagée le long de la cavité 4 de l'anneau intérieur 3. La pièce 41 est un connecteur, orienté axialement et par exemple mâle, et comprend deux contacts 411, 412 visibles à la figure 10. La seconde pièce de connexion est alors la partie femelle du connecteur 41 et s'emboîte dans celle-ci. Cette seconde pièce se prolonge par le câble de liaison électrique aux moyens de transmission électriques de la roue.

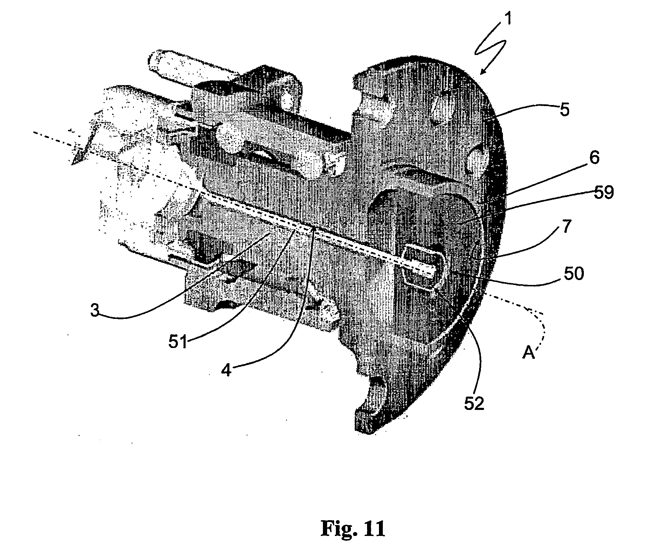

Le mode de réalisation représenté dans la figure 11 concerne un dispositif 50 de connexion analogue aux dispositifs 30 et 40, le dispositif 50 se différentiant des précédents par le fait qu'il définit un élément de connexion axial disposé en correspondance à l'axe A et qui comprend un câble 51 de connexion qui s'étend à l'intérieur de la cavité 4 et un connecteur 52 qui est disposé coaxialement par rapport à l'axe A et qui est relié au câble 51 pour relier du point de vue électrique la roue 2 et le câble 51 proprement dit.

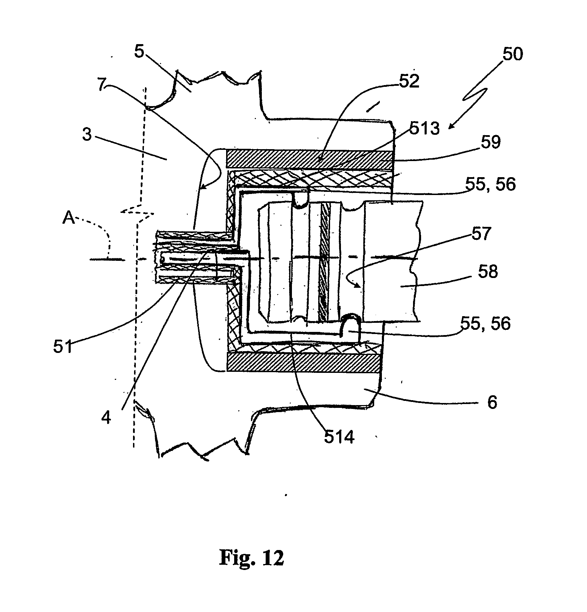

Comme illustré au mieux dans la figure 12, le câble 51 comprend un ou plusieurs fils 513 pour la transmission des données de la roue 2 vers le câble 51 et un ou plusieurs fils 514 pour l'alimentation électrique du câble 51 vers la roue 2. Dans l'exemple de réalisation représenté, le câble 51 est constitué d'un seul fil 513 et d'un seul fil 514, mais il peut présenter un nombre supérieur de fils 513 ou de fils 514.

Pour permettre une connexion facile entre le câble électrique relié aux moyens électriques de transmission de la roue 2 et le connecteur 52, ce dernier est monté sans positionnement angulaire donné par rapport à l'axe A et présente deux éléments 55 de blocage mécanique qui sont interposés entre la collerette de centrage 6 et la roue 2 de manière à garantir également la connexion électrique entre la collerette de centrage 6 et la roue 2 proprement dite.

En outre, le connecteur 52 comprend deux anneaux 56 en matériau conducteur qui sont reliés aux fils 513 et 514 et qui s'étendent radialement vers l'intérieur de la collerette de centrage 6 et qui définissent également les éléments 55 de blocage. Chacun des deux anneaux 56 est apte à engager une piste électrique 57 respective qui est reçue sur une fiche 58 solidaire de la roue 2 et qui peut être insérée à l'intérieur de la collerette de centrage 6 en position coaxiale par rapport à l'axe A.

Enfin, le dispositif 50 comprend un élément 59 de retenue qui est monté à l'intérieur de la cavité 7 et à l'intérieur du connecteur 52 pour isoler le connecteur 52 vis-à-vis de l'extérieur en le protégeant des influences atmosphériques.

Dans un mode de réalisation du dispositif 50, qui n'est pas représenté, mais que l'on peut facilement déduire de ce que l'on en a décrit plus haut, les fils 513 et 514 peuvent également être des fils coaxiaux l'un à l'autre et dans ce cas, le connecteur 52 comprend une borne métallique centrale reliée à l'un des deux fils 513, 514 et une couronne métallique disposée autour de la borne et reliée à l'autre des deux fils 514, 513.

En outre, dans ce cas, les éléments 55 de blocage sont reçus directement sur la borne et sur la couronne et maintiennent toujours les mêmes fonctions.

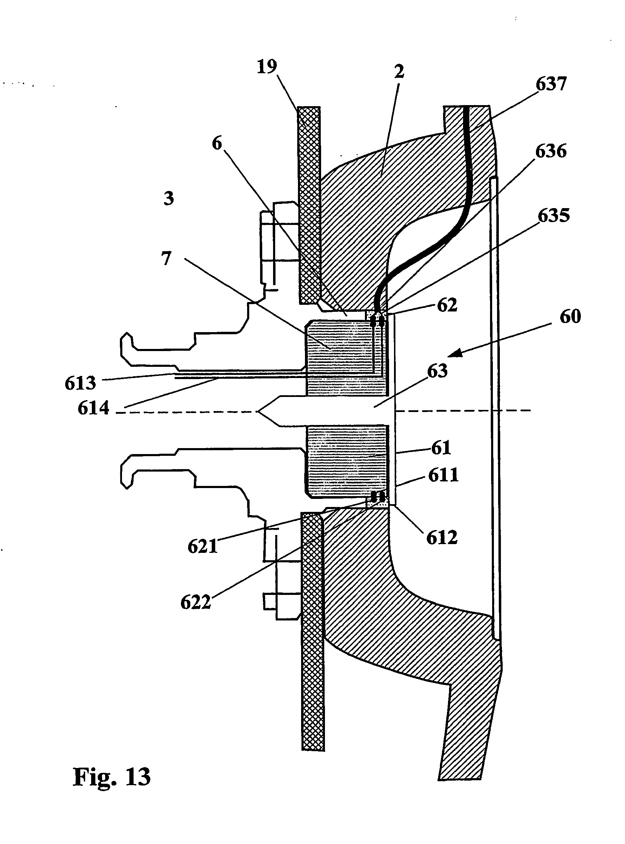

Le mode de réalisation représenté dans la figure 13 concerne un dispositif 60 analogue au dispositif 30. Ce dispositif 60 comprend deux pièces 61 et 62. La pièce 61 est de forme sensiblement tubulaire ou cylindrique et est adaptée pour venir s'encastrer dans la cavité 7 de la collerette de centrage 6. La pièce 61 a aussi une profondeur axiale supérieure à celle de la collerette de centrage 6. Cette pièce 61 comprend sur sa surface radialement extérieure deux pistes conductrices circulaires 611 et 612. Ces deux pistes sont décalées axialement l'une par rapport à l'autre. La pièce 62 est de forme cylindrique et est adaptée pour venir s'encastrer entre la paroi radialement extérieure de la pièce 61 et la paroi radialement intérieure du disque 2. La pièce 62 comprend aussi deux pistes conductrices circulaires 621 et 622 disposées après assemblage en regard des pistes correspondantes 611 et 612 de la pièce 61.

Les fils 613 et 614 sont connectés aux pistes 611 et 612 et se prolongent comme précédemment à travers la cavité axiale 4. Les fils 635 et 636 relient les contacts 621 et 622 de la pièce 62 au câble 637 relié aux moyens de transmission électrique de la roue.

Dans cet exemple de réalisation, la direction des contacts est de nouveau radiale. Les contacts de l'une quelconque des pièces 61 et 62 peuvent aussi être ponctuels sans nuire à la qualité de la connexion. Les contacts des deux pièces peuvent aussi l'être, mais dans ce cas, il est nécessaire qu'elles soient disposées selon un azimut relatif précis pour garantir la qualité de la connexion électrique.

Le dispositif de connexion 60 peut aussi comporter une pièce 63 de serrage axial destinée à fixer solidement la pièce 61 dans la cavité 7 de la collerette de centrage 6. Cette pièce 63 peut aussi assurer la mise en place de la pièce 62 tel que représenté à la figure 13.

L'invention n'est pas destinée à être limitée aux modes de réalisation qui ont été décrits et illustrés et qui doivent être considérés comme exemples de réalisation du dispositif de connexion électrique entre une roue et un ensemble roulement-moyeu, et qui sont susceptibles d'être encore modifiés par rapport aux formes et aux dispositions des pièces, des détails de construction et du montage.

## Revendications

1. Dispositif (20, 30, 40, 50, 60) de connexion électrique entre une roue (2) et un ensemble (1) de roulement-moyeu, la roue (2) étant montée sur une collerette (5) externe de l'ensemble (1) de roulement-moyeu, et l'ensemble (1) de roulement-moyeu comprenant un anneau externe (18) fixe en rotation et un anneau interne (3) doté d'une collerette de centrage (6), d'une cavité (7) frontale ouverte qui est définie dans ladite collerette de centrage (6) et d'une cavité axiale (4) débouchant dans la cavité frontale (7) ; le dispositif (20, 30, 40, 50, 60) de connexion étant **caractérisé en ce qu'**il comprend un premier câble (13, 14, 613, 614) de connexion solidaire de l'anneau interne (3) et qui s'étend à l'intérieur de la cavité axiale (4) et de la cavité frontale (7), un deuxième câble (237, 337, 637) de connexion intégré à ladite roue (2) et des moyens de connexion (21, 22, 23, 31, 41, 52, 61, 62) qui sont associés à ladite collerette de centrage (6) pour assurer un contact galvanique qui peut être débranché sélectivement entre le premier câble (13, 14, 613, 614) et le deuxième câble (237, 337, 637).

2. Dispositif (20, 30, 40, 50, 60) selon la revendication 1, dans lequel lesdits moyens de connexion (21, 22, 31, 41, 52, 61) sont fixés, au moins en partie, dans la cavité (7) de la collerette de centrage (6).

3. Dispositif (20, 30, 40, 50, 60) selon l'une des revendications 1 ou 2, dans lequel lesdits moyens de connexion (21, 22, 31, 41, 61, 62) comportent deux pièces (21, 22, 31, 32, 61, 62) emboîtables l'une dans l'autre, chacune connectée galvaniquement à l'un des premier et second câbles, et comportant chacune un jeu de contacts (211, 212, 221, 222, 223, 311, 312) adaptés pour assurer, à l'état emboîté, une liaison électrique continue entre lesdits premier et second câbles.

4. Dispositif (20, 30, 60) selon la revendication 3, dans lequel ladite première pièce (21, 31, 61) est une pièce tubulaire galvaniquement reliée au premier câble (13, 14) adaptée pour s'emboîter axialement dans la cavité (7) de ladite collerette de centrage (6).

5. Dispositif (20, 30, 60) selon l'une des revendications 3 ou 4, dans lequel l'une des pièces (22, 31, 32, 61, 62) comporte un jeu de contacts (221, 222, 223, 311, 312, 321, 322) en forme de pistes circulaires.

6. Dispositif (20, 30, 60) selon la revendication 5, dans lequel la pièce comportant le jeu de contacts en forme de pistes circulaire est la seconde pièce (22, 32, 62).

7. Dispositif (30) selon l'une des revendications 3 à 6, dans lequel lesdits premier et second jeux de contacts sont orientés axialement.

8. Dispositif (30) selon la revendication 7, dans lequel ladite seconde pièce (32) est une pièce en forme de disque galvaniquement reliée au second câble et avec des moyens d'assemblage (33) à ladite première pièce.

9. Dispositif (20, 60) selon l'une des revendications 3 à 6, dans lequel lesdits premier et second jeux de contacts sont orientés radialement.

10. Dispositif selon la revendication 9, dans lequel ladite seconde pièce (22) est une pièce tubulaire galvaniquement reliée au second câble et adaptée pour s'emboîter radialement intérieurement dans ladite première pièce (21).

11. Dispositif selon la revendication 10, dans lequel ladite seconde pièce (22) est une pièce de révolution de section axiale en forme de U.

12. Dispositif selon l'une des revendications 3 à 11, dans lequel lesdits moyens de connexion comprennent une troisième pièce (23) de liaison électrique entre ladite seconde pièce (22) et le second câble (237) intégrable sur la roue, ladite troisième pièce étant fixée de façon amovible à la roue.

13. Dispositif (60) selon la revendication 9, dans lequel ladite seconde pièce (62) est une pièce tubulaire galvaniquement reliée au second câble et adaptée pour s'emboîter radialement extérieurement dans ladite première pièce (61).

14. Dispositif (40, 50) selon l'une des revendications 1 à 3, dans lequel lesdits moyens de connexion sont définis par un élément (41, 52) de connexion axiale qui peut être sélectivement débranché et qui présente une première partie solidaire de l'ensemble (1) de roulement-moyeu et une deuxième partie solidaire de la roue (2).

15. Dispositif (40) selon la revendication 14, qui est disposé en correspondance à une paroi intérieure de la collerette de centrage (6) et qui comprend un câble (413) s'étendant le long de la cavité (4) de l'anneau intérieur (3).

16. Dispositif (50) selon la revendication 14, **caractérisé en ce qu'**il est disposé en correspondance audit axe (A) et **en ce qu'**il comprend un câble (51) s'étendant le long de la cavité (4) de l'anneau intérieur (3).

17. Dispositif (50) selon la revendication 16, **caractérisé en ce que** le câble (51) de connexion comprend au moins un fil (513)(514) pour la transmission des données et au moins un fil (514)(513) pour l'alimentation électrique.

18. Dispositif (50) selon la revendication 17, **caractérisé en ce qu'**il comprend un connecteur (52) monté à rotation angulaire par rapport audit axe (A) de rotation et qui présente au moins un élément (55) de blocage mécanique intercalé entre la collerette de centrage (6) et la roue (2).

19. Dispositif selon l'une quelconque des revendications 16 à 18, **caractérisé en ce qu'**il comprend un élément (59) de maintien associé à la collerette de centrage (6) pour isoler de l'extérieur ledit connecteur (52) en le protégeant des influences atmosphériques.

## Claims

1. System (20, 30, 40, 50, 60) for electrical connection between a wheel (2) and a bearing-hub assembly (1), the wheel (2) being mounted on an outer flange (5) of the bearing-hub assembly (1), and the bearing-hub assembly (1) comprising a rotationally fixed outer ring (18) and an inner ring (3) with a centring collar (6), a frontal open cavity (7) defined within the said centring collar (6) and an axial cavity (4) that opens into the frontal cavity (7); the said connection system (20, 30, 40, 50, 60) being **characterised in that** it comprises a first connection cable (13, 14, 613, 614) attached to the inner ring (3) and extending within the axial cavity (4) and the frontal cavity (7), a second connection able (237, 337, 637) integrated in the said wheel (2), and connection means (21, 22, 23, 31, 41, 52, 61, 62) associated with the said centring collar (6) to ensure electrical contact that can be selectively disconnected between the first cable (13, 14, 613, 614) and the second cable (237, 337, 637).

2. System (20, 30, 40, 50, 60) according to Claim 1, in which the said connection means (21, 22, 31, 41, 52, 61) are fixed, at least in part, in the cavity (7) of the centring collar (6).

3. System (20, 30, 40, 50, 60) according to either of Claims 1 or 2, in which the said connection means (21, 22, 31, 41, 61, 62) comprise two elements (21, 22, 31, 32, 61, 62) that can fit one into the other, each connected electrically to one of the first or second cables, and each comprising a set of contacts (211, 212, 221, 222, 223, 311, 312) designed so that when fitted together a continuous electric connection is formed between the first and second cables.

4. System (20, 30, 60) according to Claim 3, in which the said first element (21, 31, 61) is a tubular component electrically connected to the first cable (13, 14) and designed to fit axially in the cavity (7) of the said centring collar (6).

5. System (20, 30, 60) according to either of Claims 3 or 4, in which one of the elements (22, 31, 32, 61, 62) has a set of contacts (221, 222, 223, 311, 312, 322) in the form of circular conducting paths.

6. System (20, 30, 60) according to Claim 5, in which the element with the set of contacts in the form of circular conducting paths is the second element (22, 32, 62).

7. System (30) according to any of Claims 3 to 6, in which the said first and second sets of contacts are orientated axially.

8. System (30) according to Claim 7, in which the said second element (32 is a disc-shaped component electrically connected to the second cable, with means (33) for its assembly to the said first element.

9. System (20, 60) according to any of Claims 3 to 6, in which the said first and second sets of contacts are orientated radially.

10. System according to Claim 9, in which the said second element (22) is a tubular component electrically connected to the second cable and designed to fit radially inside the said first component (21).

11. System according to Claim 10, in which the said second element (22) is a rotationally symmetrical component with a U-shaped cross-section.

12. System according to any of Claims 3 to 11, in which the said connection means comprise a third electrical connection element (23) between the said second element (22) and the second cable (237) that can be integrated with the wheel, the said third element being removably attached to the wheel.

13. System (60) according to Claim 9, in which the said second element (62) is a tubular component electrically connected to the second cable and designed to fit radially externally in the said first element (61).

14. System (40, 50) according to any of Claims 1 to 3, in which the said connection means are defined by an axial connection element (41, 52) which can be selectively disconnected and which comprises a first part fixed to the bearing-hub assembly (1) and a second part fixed to the wheel (2).

15. System (40) according to Claim 14, arranged in correspondence with an inside wall of the centring collar (6) and comprising a cable (413) that extends along the cavity (4) of the inner ring (3).

16. System (50) according to Claim 14, **characterised in that** it is arranged in line with the said axis (A) and comprises a cable (51) that extends along the cavity (4) of the inner ring (3).

17. System (50) according to Claim 16, **characterised in that** the connection cable comprises at least one wire (513)(514) for data transmission and at least one wire (514)(513) for the supply of electricity.

18. System (50) according to Claim 17, **characterised in that** it comprises a connector (52) mounted to rotate angularly relative to the said rotation axis (A) and having at least one mechanical locking element (55) interposed between the centring collar (6) and the wheel (2).

19. System according to any of Claims 16 to 18, **characterised in that** it comprises a retaining element (59) associated with the centring collar (6) to isolate the outside of the said connector (52) and protect it from atmospheric influences.

## Patentansprüche

1. Elektrische Verbindungsvorrichtung (20, 30, 40, 50, 60) zwischen einem Rad (2) und einer Lager/Nabe-Einheit (1), wobei das Rad (2) auf einen äußeren Bund (5) der Lager/Nabe-Einheit (1) montiert ist und die Lager/Nabe-Einheit (1) einen in Drehung festen äußeren Ring (18) und einen inneren Ring (3) enthält, der mit einem Zentrierbund (6), mit einem offenen stirnseitigen Hohlraum (7), der in dem Zentrierbund (6) definiert ist, und mit einem axialen Hohlraum (4) versehen ist, der in den stirnseitigen Hohlraum (7) mündet; wobei die Verbindungsvorrichtung (20, 30, 40, 50, 60) **dadurch gekennzeichnet ist, dass** sie ein erstes Verbindungskabel (13, 14, 613, 614), das fest mit dem inneren Ring (3) verbunden ist und sich im Inneren des axialen Hohlraums (4) und des stirnseitigen Hohlraums (7) erstreckt, ein zweites Verbindungskabel (237, 337, 637), das in das Rad (2) integriert ist, und Verbindungseinrichtungen (21, 22, 23, 31, 41, 52, 61, 62) enthält, die dem Zentrierbund (6) zugeordnet sind, um einen galvanischen Kontakt zu gewährleisten, der selektiv zwischen dem ersten Kabel (13, 14, 613, 614) und dem zweiten Kabel (237, 337, 637) abgeschaltet werden kann.

2. Vorrichtung (20, 30, 40, 50, 60) nach Anspruch 1, bei der die Verbindungseinrichtungen (21, 22, 31, 41, 52, 61) zumindest zum Teil im Hohlraum (7) des Zentrierbunds (6) befestigt sind.

3. Vorrichtung (20, 30, 40, 50, 60) nach einem der Ansprüche 1 oder 2, bei der die Verbindungseinrichtungen (21, 22, 31, 41, 61, 62) zwei ineinandersteckbare Bauteile (21, 22, 31, 32, 61, 62) enthalten, von denen jedes galvanisch mit einem der ersten und zweiten Kabel verbunden ist, und die je einen Satz von Kontakten (211, 212, 221, 222, 223, 311, 312) aufweisen, die geeignet sind, um im ineinandergesteckten Zustand eine durchgehende elektrische Verbindung zwischen dem ersten und dem zweiten Kabel zu gewährleisten.

4. Vorrichtung (20, 30, 60) nach Anspruch 3, bei der das erste Bauteil (21, 31, 61) ein galvanisch mit dem ersten Kabel (13, 14) verbundenes, rohrförmiges Bauteil ist, das geeignet ist, um axial in den Hohlraum (7) des Zentrierbunds (6) eingesteckt zu werden.

5. Vorrichtung (20, 30, 60) nach einem der Ansprüche 3 oder 4, bei der eines der Bauteile (22, 31, 32, 61, 62) einen Satz von Kontakten (221, 222, 223, 311, 312, 321, 322) in Form von kreisförmigen Bahnen aufweist.

6. Vorrichtung (20, 30, 60) nach Anspruch 5, bei der das den Satz von Kontakten in Form von kreisförmigen Bahnen aufweisende Bauteil das zweite Bauteil (22, 32, 62) ist.

7. Vorrichtung (30) nach einem der Ansprüche 3 bis 6, bei dem der erste und der zweite Satz von Kontakten axial ausgerichtet sind.

8. Vorrichtung (30) nach Anspruch 7, bei der das zweite Bauteil (32) ein scheibenförmiges Bauteil ist, das galvanisch mit dem zweiten Kabel und mit Einrichtungen zur Befestigung (33) am ersten Bauteil verbunden ist.

9. Vorrichtung (20, 60) nach einem der Ansprüche 3 bis 6, bei der der erste und der zweite Satz von Kontakten radial ausgerichtet sind.

10. Vorrichtung nach Anspruch 9, bei der das zweite Bauteil (22) ein rohrförmiges Bauteil ist, das galvanisch mit dem zweiten Kabel verbunden und geeignet ist, um radial innen in das erste Bauteil (21) eingesteckt zu werden.

11. Vorrichtung nach Anspruch 10, bei der das zweite Bauteil (22) ein drehsymmetrisches Bauteil mit U-förmigem axialem Querschnitt ist.

12. Vorrichtung nach einem der Ansprüche 3 bis 11, bei der die Verbindungseinrichtungen ein drittes elektrisches Verbindungsbauteil (23) zwischen dem zweiten Bauteil (22) und dem zweiten Kabel (237) enthalten, das auf das Rad integrierbar ist, wobei das dritte Bauteil lösbar am Rad befestigt ist.

13. Vorrichtung (60) nach Anspruch 9, bei der das zweite Bauteil (62) ein rohrförmiges Bauteil ist, das galvanisch mit dem zweiten Kabel verbunden und geeignet ist, um radial außen in das erste Bauteil (61) eingesteckt zu werden.

14. Vorrichtung (40, 50) nach einem der Ansprüche 1 bis 3, bei der die Verbindungseinrichtungen durch ein axiales Verbindungselement (41, 52) definiert werden, das selektiv abgeschaltet werden kann und einen ersten, fest mit der Lager/Nabe-Einheit (1) verbundenen und einen zweiten, fest mit dem Rad (2) verbundenen Teil aufweist.

15. Vorrichtung (40) nach Anspruch 14, die entsprechend einer Innenwand des Zentrierbunds (6) angeordnet ist und ein Kabel (413) enthält, das sich entlang des Hohlraums (4) des inneren Rings (3) erstreckt.

16. Vorrichtung (50) nach Anspruch 14, **dadurch gekennzeichnet, dass** sie entsprechend der Achse (A) angeordnet ist, und dass sie ein Kabel (51) enthält, das sich entlang des Hohlraums (4) des inneren Rings (3) erstreckt.

17. Vorrichtung (50) nach Anspruch 16, **dadurch gekennzeichnet, dass** das Verbindungskabel (51) mindestens einen Draht (513)(514) für die Übertragung der Daten und mindestens einen Draht (514)(513) für die Stromversorgung aufweist.

18. Vorrichtung (50) nach Anspruch 17, **dadurch gekennzeichnet, dass** sie einen Verbinder (52) enthält, der mit Winkeldrehung bezüglich der Drehachse (A) montiert ist und mindestens ein mechanisches Blockierelement (55) hat, das zwischen den Zentrierbund (6) und das Rad (2) eingeschoben ist.

19. Vorrichtung nach einem der Ansprüche 16 bis 18, **dadurch gekennzeichnet, dass** sie ein Halteelement (59) aufweist, das dem Zentrierbund (6) zugeordnet ist, um den Verbinder (52) von der Außenumgebung zu isolieren, indem er vor atmosphärischen Einflüssen geschützt wird.
